# EUROPÄISCHE PATENTANMELDUNG

(11) **EP 0 982 514 A1**
(43) Veröffentlichungstag der Anmeldung: **01.03.2000**
(21) Anmeldenummer: 99202706.0
(22) Anmeldetag: 23.08.1999
(51) Int. Cl.: F16F 9/10

(54) **Flüssigkeitsgefüllter Dämpfer für ein erschütterungs-empfindliches Gerät**

(30) Priorität: 26.08.1998 DE 19838753
(71) Anmelder: Philips Corporate Intellectual Property GmbH, 52064 Aachen (DE); Koninklijke Philips Electronics N.V., 5621 BA Eindhoven (NL)
(72) Erfinder: Hopf, Christian, Philips Corp. Inte. Property GmbH, 22335 Hamburg (DE); Kunze, Norbert, Philips Corp. Inte. Property GmbH, 22335 Hamburg (DE); Müller, Stefan, Philips Corp. Inte. Property GmbH, 22335 Hamburg (DE); Rumpf, Horst, Philips Corp. Inte. Property GmbH, 22335 Hamburg (DE); Wouters, Cornelius, Philips Corp. Inte. Proty.GmbH, 22335 Hamburg (DE)
(74) Vertreter: Volmer, Georg, Dipl.-Ing.

(57) **Zusammenfassung**

Flüssigkeitsgefüllter Dämpfer (1) für ein erschütterungsempfindliches Gerät.

Die Erfindung bezieht sich auf einen flüssigkeitsgefüllten Dämpfer für ein erschütterungsempfindliches Gerät mit einem Basisteil (2) und einem elastischen Deckelteil (3).

Die Aufgabe der Erfindung besteht darin, einen flüssigkeitsgefüllten Dämpfer sowie ein Verfahren zu dessen Herstellung zu schaffen, welcher einfacher und zuverlässiger herstellbar und montierbar ist.

Hierzu ist vorgesehen, daß der flüssigkeitsgefüllte Dämpfer ein integriertes Befestigungselement aufweist und daß das Basisteil und das integrierte Befestigungselement mittels des elastischen Deckelteils verbunden sind.

## Beschreibung

Die Erfindung bezieht sich auf einen flüssigkeitsgefüllten Dämpfer für ein erschütterungsempfindliches Gerät mit einem Basisteil und einem elastischen Deckelteil.

Ein derartiger Dämpfer ist aus der JP-A-07 071 507 bekannt. Das Deckelteil dieses bekannten Dämpfers weist eine elastische Einbuchtung auf, die zur Aufnahme eines Haltestiftes vorgesehen ist. In einem erschütterungsempfindlichen Gerät wird das Basisteil des flüssigkeitsgefüllten Dämpfers entweder an dem Gehäuse oder an einer erschütterungsempfindlichen Baueinheit des Gerätes befestigt. In dazu korrespondierender Weise weist entweder die erschütterungsempfindliche Baueinheit oder das Gehäuse einen oder mehrere Haltestifte auf, die in die Einbuchtung des elastischen Deckelteils des Dämpfers eingreifen. Dadurch wird die erschütterungsempfindliche Baueinheit elastisch und gedämpft in dem Gehäuse des erschütterungsempfindlichen Gerätes aufgehängt. Diese bekannte Konstruktion hat den Nachteil, daß der Haltestift und der Dämpfer zunächst separat montiert werden müssen und erst danach der Haltestift mit der Einbuchtung des Deckelteils in Eingriff gebracht wird.

Es ist Aufgabe der Erfindung, einen flüssigkeitsgefüllten Dämpfer sowie ein Verfahren zu dessen Herstellung zu schaffen, welcher einfacher und zuverlässiger herstellbar und montierbar ist.

Diese Aufgabe ist für den Dämpfer erfindungsgemäß dadurch gelöst, daß der flüssigkeitsgefüllte Dämpfer ein integriertes Befestigungselement aufweist und daß das Basisteil und das integrierte Befestigungselement mittels des elastischen Deckelteils verbunden sind.

Das Befestigungselement ist somit ein integraler Bestandteil des flüssigkeitsgefüllten Dämpfers. Der elastische Deckelteil ist einerseits mit dem integrierten Befestigungselement und andererseits mit dem Basisteil verbunden. Vorzugsweise ist das integrierte Befestigungselement in der Mitte des elastischen Deckelteils angeordnet und wird von dem elastischen Deckelteil umschlossen. Das Befestigungselement ist somit elastisch und gedämpft mit dem Basisteil verbunden.

Bei der vorteilhaften Ausgestaltung der Erfindung gemäß Anspruch 2 kann das integrierte Befestigungselement beispielsweise als Schnapp-, Klick- bzw. Rastelement ausgeführt werden. Vorzugsweise bestehen das Basisteil und das integrierte Befestigungselement aus demselben Kunststoff. Es sind jedoch auch verschiedene im wesentlichen unelastische Kunststoffmaterialien für das Basisteil und das integrierte Befestigungselement möglich. Ein derartiger Dämpfer läßt sich sehr einfach und kostengünstig fertigen, vorzugsweise mittels Mehrkomponentenspritzen.

Bei der vorteilhaften Ausgestaltung der Erfindung gemäß Anspruch 3 kann das integrierte Befestigungselement beispielsweise als Tülle ausgebildet sein, welche zur Befestigung an einem Gegenstück durch ein Loch im Gegenstück gezogen werden kann und sich dadurch selbst festklemmt. Das Deckelteil und das integrierte Befestigungselement bestehen bei dieser Ausführungsform vorzugsweise aus demselben Material, insbesondere aus Gummi.

Gemäß der bevorzugten Ausführungsform der Erfindung nach Anspruch 4 ist das Befestigungselement als Befestigungsstift ausgebildet. Ein solcher Befestigungsstift ist fertigungstechnisch besonders günstig und läßt sich zudem auf einfache Weise mit Elementen des erschütterungsempfindlichen Gerätes fest verbinden, z.B. durch Einpressen in ein Befestigungsloch des erschütterungsempfindlichen Gerätes. Eine solche Verbindung ist zudem sehr zuverlässig. Bei der vorteilhaften Ausgestaltung der Erfindung gemäß Anspruch 5 erstreckt sich der Befestigungsstift einerseits außerhalb des elastischen Deckelteils. Dieser außerhalb des elastischen Deckelteils gelegene Teil des Befestigungsstiftes kann z.B. in einem Befestigungsloch des erschütterungsempfindlichen Gerätes befestigt werden. Andererseits erstreckt sich der Befestigungsstift aber auch in den inneren, flüssigkeitsgefüllten Teil des Dämpfers. Dadurch wird die Bewegung des Befestigungsstiftes durch die sich innerhalb des Dämpfers befindende Flüssigkeit gedämpft.

Die vorteilhafte Ausgestaltung der Erfindung gemäß Anspruch 6 hat den Vorteil, daß sich damit besonders gute Dämpfungseigenschaften erzielen lassen.

Die Aufgabe der Erfindung ist für ein elektronisches Gerät erfindungsgemäß dadurch gelöst, daß der Dämpfer ein integriertes Befestigungselement aufweist, daß das Basisteil und das integrierte Befestigungselement mittels des elastischen Deckelteils verbunden sind, daß entweder das integrierte Befestigungselement an dem Gehäuse befestigt ist und das Basisteil an der erschütterungsempfindlichen Baueinheit befestigt ist oder daß das integrierte Befestigungselement an der erschütterungsempfindlichen Baueinheit befestigt ist und das Basisteil an dem Gehäuse befestigt ist.

Bei einem derartigen elektronischen Gerät lassen sich die Dämpfer und die erschütterungsempfindliche Baueinheit auf einfache Art und Weise montieren. Es ist keine getrennte Montage der Befestigungselemente und der Dämpfer erforderlich.

Als elektronische Geräte sind besonders Geräte gemäß Anspruch 8 geeignet, da die optischen Lese- und/der Schreibeinheiten derartiger Geräte für einen störungsfreien Betrieb sehr gut gegen äußere Schwingungen gedämpft sein müssen. Besonders hohe Anforderungen werden hierbei an Geräte gestellt, die für den Einbau in ein Fahrzeug vorgesehen sind, da derartige Geräte während der Fahrt vielfachen Schwingungen ausgesetzt sind.

Die Lösung der Aufgabe ist für das erfindungsgemäße Verfahren gekennzeichnet durch die Verfahrensschritte
- Spritzen eines Basisteils und eines Befestigungselementes aus einem im wesentlichen unelastischen Kunststoff und
- Spritzen eines Deckelteils aus einem elastischen Kunststoff, wobei das Basisteil und das Befestigungselement mittels des elastischen Deckelteils miteinander verbunden werden.

Bei diesem Verfahren handelt es sich um ein Mehrkomponenten-Spritzverfahren. In einem ersten Verfahrensschritt werden das Basisteil und das Befestigungselement, z.B. der Befestigungsstift, aus Kunststoff gespritzt. Diese beiden Kunststoffspritzteile werden dann in der gewünschten Position fixiert und in einem nachfolgenden Verfahrensschritt wird das Deckelteil aus einem elastischen Material, vorzugsweise einem elastischen Kunststoff, einerseits an das Basisteil und andererseits an das Befestigungselement angespritzt. Ein derartiges Verfahren ist besonders einfach und kostengünstig, da der komplette Dämpfer einstückig fertigbar ist und keine getrennte Herstellung und Montage der Befestigungselemente erforderlich ist.

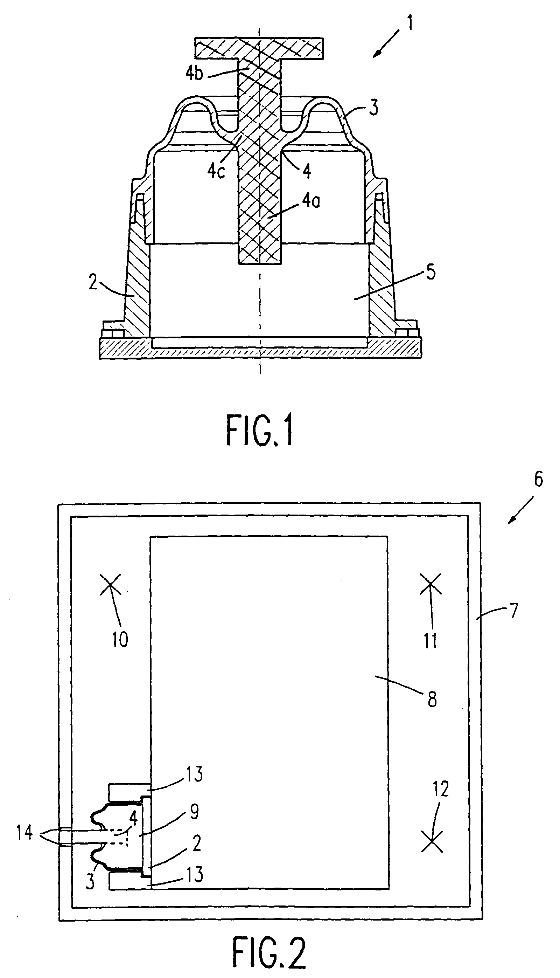

Einige schematisch dargestellte Ausführungsbeispiele der Erfindung werden nachfolgend anhand der Zeichnung in den Figuren 1 und 2 näher erläutert. Es zeigen:
- Fig. 1: eine Schnittdarstellung eines flüssigkeitsgefüllten Dämpfers mit einem integrierten Befestigungsstift,
- Fig. 2: eine Draufsicht auf ein elektronisches Gerät mit einer in einem Gehäuse angeordneten erschütterungsempfindlichen Baueinheit, welche mittels vier flüssigkeitsgefüllten Dämpfern mit dem Gehäuse gekoppelt ist.

Fig. 1 zeigt einen flüssigkeitsgefüllten Dämpfer 1 im Schnitt, der ein zylinderförmiges Basisteil 2, einen das zylinderförmige Basisteil 2 abschließendes elastisches Deckelteil 3 sowie als Befestigungselement einen Befestigungsstift 4 aufweist. Das Basisteil 2 und das Deckelteil 3 umschließen einen Hohlraum 5, der mit Öl gefüllt ist. Der Befestigungsstift 4 ist zentral innerhalb des Deckelteils 3 angeordnet und erstreckt sich mit einem inneren Teil 4a in den Hohlraum 5 hinein und mit einem äußeren Teil 4b außerhalb des Hohlraums 5 und des Deckelteils 3. Der Befestigungsstift 4 ist in einem axialen Zentralbereich 4c mit dem elastischen Deckelteil 3 verbunden. Das elastische Deckelteil 3 umschließt den zylindrischen Befestigungsstift 4 in dem axialen Zentralbereich 4c ringförmig. Das Basisteil 2 und der Befestigungsstift 4 bestehen vorzugsweise aus einem steifen, unelastischen Kunststoff Das elastische Deckelteil 3 besteht vorzugsweise aus einem elastischen Kunststoff. Die Fertigung des flüssigkeitsgefüllten Dämpfers 1 erfolgt vorzugsweise in einem Mehrkomponenten-Spritzverfahren. In einem ersten Verfahrensschritt werden das Basisteil 2 und der zylindrische Befestigungsstift 4 aus Kunststoff gespritzt. Danach wird in das Basisteil 2 als viskoses Material Öl eingebracht. Nachfolgend werden das Basisteil 2 und der Befestigungsstift 4 in der gewünschten Zuordnung zueinander angeordnet und durch einen nachfolgenden Spritzvorgang wird das Deckelteil 3 einerseits an den Befestigungsstift 4 und andererseits an das Basisteil 2 angeformt, wodurch das Basisteil 2 und der integrierte Befestigungsstift 4 mittels des Deckelteils 3 verbunden werden und wodurch der geschlossene Hohlraum 5 gebildet wird.
Der Befestigungsstift 4 ist also elastisch gegenüber dem Basisteil 2 gelagert. Bei Bewegung des Befestigungsstiftes 4 gegenüber dem Basisteil 2 wird das innere Teil 4a des Befestigungsstiftes 4 in dem sich in dem Hohlraum 5 befindenden Öl bewegt, wodurch die Bewegung des Befestigungsstiftes 4 gedämpft wird. Der Befestigungsstift 4 ist dazu vorgesehen, entweder an einer erschütterungsempfindlichen Baueinheit eines erschütterungsempfindlichen Gerätes oder an einem Gehäuseelement des erschütterungsempfindlichen Gerätes befestigt zu werden. Dazu korrespondierend wird das Basisteil 2 entweder an dem Gehäuseelement des erschütterungsempfindlichen Gerätes oder an der erschütterungsempfindlichen Baueinheit befestigt. Dies ist in der Fig. 2 näher beschrieben.

Fig. 2 zeigt ein elektronisches Gerät 6, welches zum Lesen von auf einer optischen Speicherplatte gespeicherten Informationen und/oder zum Schreiben von Informationen auf eine optische Speicherplatte vorgesehen ist, insbesondere einen CD/DVD-Spieler.

Das elektronische Gerät 6 weist eine Gehäusewand 7 auf. Innerhalb der Gehäusewand 7 ist eine optische Abspieleinheit 8 angeordnet. Die optische Abspieleinheit 8 ist mit der Gehäusewand 7 mittels vier baugleichen flüssigkeitsgefüllten Dämpfern 9, 10, 11 und 12 gekoppelt. Die flüssigkeitsgefüllten Dämpfer 9 bis 12 sind entsprechend dem flüssigkeitsgefüllten Dämpfer 1 gemäß Fig. 1 aufgebaut. Für gleiche Elemente der flüssigkeitsgefüllten Dämpfer 9 bis 12 werden daher die gleichen Bezugsziffern verwendet wie für den flüssigkeitsgefüllten Dämpfer 1 gemäß Fig. 1. Die flüssigkeitsgefüllten Dämpfer 9 bis 12 weisen dementsprechend jeweils ein Basisteil 2, ein Deckelteil 3 und einen Befestigungsstift 4 auf. Innerhalb der flüssigkeitsgefüllten Dämpfer 9 bis 12 befindet sich jeweils ein Hohlraum 5, der mit Öl gefüllt ist. Die optische Abspieleinheit 8 weist für die vier flüssigkeitsgefüllten Dämpfer 9 bis 12 jeweils eine Haltevorrichtung 13 auf, die fest mit der optischen Abspieleinheit 8 verbunden ist. Die Haltevorrichtungen 13 sind schematisch dargestellt und können z.B. als Kunststoff-Spritzelemente ausgebildet sein. Die Basisteile 2 der flüssigkeitsgefüllten Dämpfer 9 bis 12 sind in den Haltevorrichtungen 13 befestigt. Die Befestigung kann auf verschiedene Art und Weise, beispielsweise durch ein formschlüssiges Einrasten oder Einklicken erfolgen. Die Befestigungsstifte 4 der flüssigkeitsgefüllten Dämpfer 9 bis 12 sind in Befestigungslöchern 14 der Gehäusewand 7 befestigt. Die Befestigung der Befestigungsstifte 4 in den zylindrischen Befestigungslöchern 14 der Gehäusewand 7 kann z.B. mittels Eindrücken oder Einpressen in die Befestigungslöcher 14 erfolgen. Ferner sind Schnapp- oder Klickverbindungen realisierbar. Somit sind die flüssigkeitsgefüllten Dämpfer 9 bis 12 einerseits mittels der Befestigungsstifte 4 und der Befestigungslöcher 14 mit der Gehäusewand 7 und andererseits mittels der Basisteile 2 und der Haltevorrichtungen 13 mit der optischen Abspieleinheit 8 fest verbunden. Das elektronische Gerät 6 ist insbesondere für den Einbau in ein Fahrzeug vorgesehen. Die während der Fahrt des Fahrzeugs auftretenden Schwingungen werden dabei an die Gehäusewand 7 des elektronischen Gerätes 6 übertragen. Da die optische Abspieleinheit 8 sehr erschütterungsempfindlich ist, dürfen die Schwingungen des Fahrzeugs jedoch nicht auf die optische Abspieleinheit 8 übertragen werden. Dies wird mittels der flüssigkeitsgefüllten Dämpfer 9 bis 12 gewährleistet, welche die optische Abspieleinheit 8 schwimmend im Innern des elektronischen Gerätes 6 lagern.

Da die Befestigungsstifte 4 einstückig mit dem Basisteil 2 und dem Deckelteil 3 ausgebildet sind, können die flüssigkeitsgefüllten Dämpfer 9 bis 12 auf einfache Art und Weise montiert werden. Es ist keine getrennte Montage von Befestigungsstiften und Dämpfern erforderlich. Dies ist fertigungstechnisch vorteilhaft.

## Patentansprüche

1. Flüssigkeitsgefüllter Dämpfer für ein erschütterungsempfindliches Gerät mit einem Basisteil und einem elastischen Deckelteil,
dadurch gekennzeichnet,
daß der flüssigkeitsgefüllte Dämpfer ein integriertes Befestigungselement aufweist und daß das Basisteil und das integrierte Befestigungselement mittels des elastischen Deckelteils verbunden sind.

2. Flüssigkeitsgefüllter Dämpfer nach Anspruch 1,
dadurch gekennzeichnet,
daß das Basisteil und das integrierte Befestigungselement aus einem im wesentlichen unelastischen Kunststoff bestehen und daß das elastische Deckelteil aus einem Elastomer, insbesondere aus einem elastischen Kunststoff, besteht.

3. Flüssigkeitsgefüllter Dämpfer nach Anspruch 1,
dadurch gekennzeichnet,
daß das Basisteil aus einem im wesentlichen unelastischen Kunststoff besteht und daß das elastische Deckelteil und das integrierte Befestigungselement aus einem Elastomer, insbesondere aus Gummi, bestehen.

4. Flüssigkeitsgefüllter Dämpfer nach Anspruch 1,
dadurch gekennzeichnet,
daß das Befestigungselement als Befestigungsstift ausgebildet ist.

5. Flüssigkeitsgefüllter Dämpfer nach Anspruch 4,
dadurch gekennzeichnet,
daß der Befestigungstift in einem axialen Zentralbereich mit dem elastischen Deckelteil verbunden ist.

6. Flüssigkeitsgefüllter Dämpfer nach Anspruch 1,
dadurch gekennzeichnet,
daß die Flüssigkeit ein viskoses Material, insbesondere Öl, ist.

7. Elektronisches Gerät mit einer in einem Gehäuse angeordneten erschütterungsempfindlichen Baueinheit, welche mittels wenigstens eines flüssigkeitsgefüllten Dämpfers mit dem Gehäuse gekoppelt ist, wobei der Dämpfer ein Basisteil und ein elastisches Deckelteil aufweist,
dadurch gekennzeichnet,
daß der Dämpfer ein integriertes Befestigungselement aufweist, daß das Basisteil und das integrierte Befestigungselement mittels des elastischen Deckelteils verbunden sind, daß entweder das integrierte Befestigungselement an dem Gehäuse befestigt ist und das Basisteil an der erschütterungsempfindlichen Baueinheit befestigt ist oder daß das integrierte Befestigungselement an der erschütterungsempfindlichen Baueinheit befestigt ist und das Basisteil an dem Gehäuse befestigt ist.

8. Elektronisches Gerät nach Anspruch 7,
dadurch gekennzeichnet,
daß das Gerät ein Gerät zum Lesen von auf einer optischen Speicherplatte gespeicherten Informationen und/oder zum Schreiben von Informationen auf eine optische Speicherplatte, insbesondere ein CD/DVD-Gerät, ist.

9. Elektronisches Gerät nach Anspruch 7,
dadurch gekennzeichnet,
daß das Gerät für den Einbau in ein Fahrzeug vorgesehen ist.

10. Verfahren zur Herstellung eines flüssigkeitsgefüllten Dämpfers,
gekennzeichnet durch die Verfahrensschritte,
- Spritzen eines Basisteils und eines Befestigungselementes aus einem im wesentlichen unelastischen Kunststoff und
- Spritzen eines Deckelteils aus einem elastischen Kunststoff, wobei das Basisteil und das Befestigungselement mittels des elastischen Deckelteils miteinander verbunden werden.
